# EUROPEAN PATENT SPECIFICATION

(11) **EP 0 354 563 B1**
(45) Date of publication and mention of the grant of the patent: **09.02.1994**
(21) Application number: 89114749.8
(22) Date of filing: 09.08.1989
(51) Int. Cl.: B60G 17/015, B60G 21/08, B62D 6/00, F02D 13/02, F02D 41/00

(54) **Device for switching vehicle characteristics**
Vorrichtung zur Änderung der Fahreigenschaften eines Fahrzeugs
Dispositif pour modifier les caractéristiques de roulage d'un véhicule

(30) Priority: 10.08.1988 JP 199612/88
(43) Date of publication of application: 14.02.1990
(73) Proprietor: HONDA GIKEN KOGYO KABUSHIKI KAISHA, Minato-ku Tokyo (JP)
(72) Inventor: Asanuma, Yoshinobu, Wako-shi Saitama-ken (JP); Ishida, Shinnosuke, Wako-shi Saitama-ken (JP); Hasegawa, Hiroshi, Wako-shi Saitama-ken (JP)
(74) Representative: Prechtel, Jörg, Dipl.-Phys. Dr.

(56) References cited:
- EP-A- 0 120 195
- EP-A- 0 202 680
- US-A- 3 715 572
- PATENT ABSTRACTS OF JAPAN vol. 12, no. 179 (M-701)(3026) 26 May 1988,& JP-A-62 289421 (MAZDA MOTOR CORPORATION) 16 December 1987,
- PATENT ABSTRACTS OF JAPAN vol. 12, no. 179 (M-701)(3026) 26 May 1988,& JP-A-62 289422 (MAZDA MOTOR CORPORATION) 16 December 1987,
- IEEE SPECTRUM. vol. 19, no. 11, November 1982, NEW YORK US pages 30 - 36; R.K.JURGEN: "Drivers get more options in 1983"

## Description

The invention relates to a device for automatically switching vehicle characteristics of a vehicle, according to the pre-characterising part of claim 1.

Such generic devices are known from JP-A-62-289421 and JP-A-62-289422, for example. The device according to JP-A-62-289421 is used to switch a suspension system between softer and harder damping characteristics depending on the kind of road the vehicle is running on. The device according to JP-A-62-289422 is used to switch a height adjusting system between high or low ground clearance of the vehicle. In addition to these two applications, it is also conceivable to use a generic device for switching a steering system between a soft and a sharp steering behaviour depending on the kind of road.

With the devices known from JP-A-62-289421 and JP-A-62-289422, a control means determines the current kind of road from a memory means depending on the current position of the vehicle detected by a sensor means. According to the thus determined kind of road, the control means further outputs a switching signal to a switching means for automatically adjusting the vehicle characteristics. In the known devices, the road information is stored in the memory means in advance, i.e. corresponding road information is stored for all roads of a region in which the vehicle is usually driven. Therefore a vast memory capacity has to be provided in the memory means, most of which is unnecessary as drivers normally tend to use only a few travel paths, but these ones frequently. The large memory capacity required makes the known device expensive.

In contrast to this, it is the object of the present invention to provide a device for automatically switching vehicle characteristics permitting a reduction in memory capacity.

According to the invention, this object is solved by providing input means for inputting road information to the memory means concerning an expected travel path. Correspondingly, only as much memory has to be incorporated in the device as is needed for storing a long travel path. Before a ride, the road information corresponding to the expected travel path is input to the memory means using the input means. During the travel the vehicle characteristics is switched according to the stored information depending on the current position of the vehicle detected by the position sensor means.

Advantageous and preferred embodiments of the invention are described in the dependent claims.

EP-A-0 202 680 reveals a device for automatically switching vehicle characteristics on the basis of road information. However, this road information is determined during the ride from driving status measured values.

EP-A-0 120 195, US-A-3 715 572 and IEEE Spectrum ("drivers get more options in 1983" by R.K. Jurgen, vol. 19, no. 11, November 1982, pages 30-36) generally refer to the application of navigation systems in vehicles. However, these systems are not used in combination with a device for automatically switching vehicle characteristics.

In the following the invention will be described in more detail with reference to the accompanying drawings in which:
Fig. 1 is a block diagram showing the construction of an embodiment of the device for switching the vehicle characteristics according to the present invention.
Fig. 2 shows an example of a picture shown on a display unit of the embodiment shown in Fig. 1.
Fig. 3 is a diagram showing a positional relationship of a highway relative to a usual way.

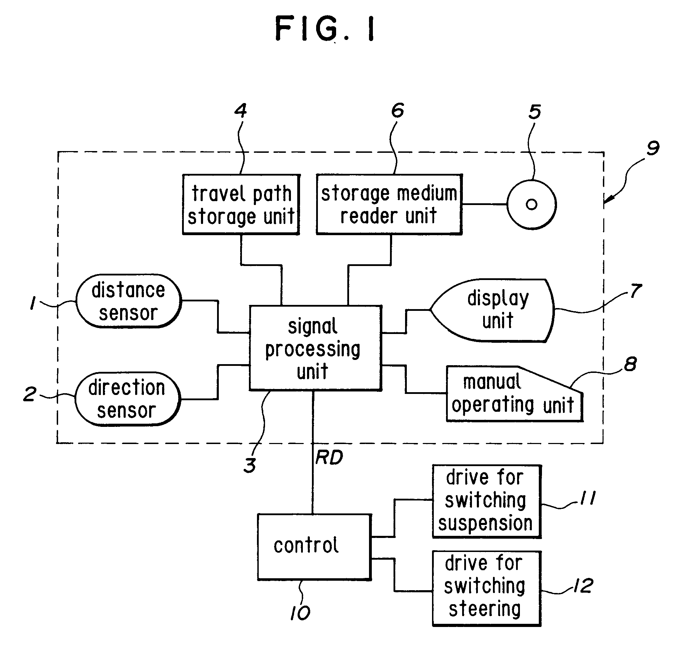

The device for switching the vehicle characteristics according to the present invention shown in Fig. 1, comprises a navigation system part 9 which includes a distance detector 1 for measuring a running distance of the vehicle by counting a number of pulse signals which are generated in response to a rotation of a tyre, for example, of the vehicle at every one of unit running distances; a direction detector 2 for detecting an azimuth or an amount of variation of a running direction of the vehicle which varies depending upon a running of the vehicle, said direction detector consisting of a geomagnetic sensor, a gyroscope or the like; a signal processing unit (computer control unit) 3 for receiving detection signals produced from said distance detector 1 and said direction detector 2 and for successively finding positions of the vehicle in a system of X-Y coordinates by an arithmetic operation at every one of unit running distances of the vehicle and effecting a central control of a whole system, said signal processing unit consisting of a CPU, a programming ROM, a controlling RAM and the like; a travel path storage unit 4 for successively storing positional data concerning constantly changing positions of the vehicle in the system of X-Y coordinates found by said signal processing unit 3 and for holding said data as finite continuous positional informations corresponding current positions of the vehicle; a map information storage medium 5 in which a plurality of previously digitized map informations are stored in the form of file units; a storage medium reader unit 6 for selectively reading out a required map information from the storage medium; a display unit 7 for displaying a picture of a map on a picture plane in response to the map information read out by said reader unit and for constantly and renewedly displaying a current position of the vehicle, a running path to the current position, a current running direction and the like on a same picture plane of said display unit on the basis of the positional data stored in the travel path storage unit; and a manual operating unit 8 for feeding an instruction for operation to the signal processing unit 3 and for effecting proper operations, such as designation for selection of a map to be displayed on the display unit 7, setting of a starting point of the vehicle on the map displayed on the display unit, changing of the setting of a reducing scale rate of the displayed picture and rotation of the displayed picture. The device according to the present invention further comprises a drive 11 for switching a suspension system of the vehicle to soft or hard condition, a drive 12 for switching a steering system of the vehicle to soft or sharp condition, both on the basis of a road information RD produced by the signal processing unit 3 in the navigation system part 9 and a controller 10 for properly controlling the switching operation of the drive 11 and the drive 12.

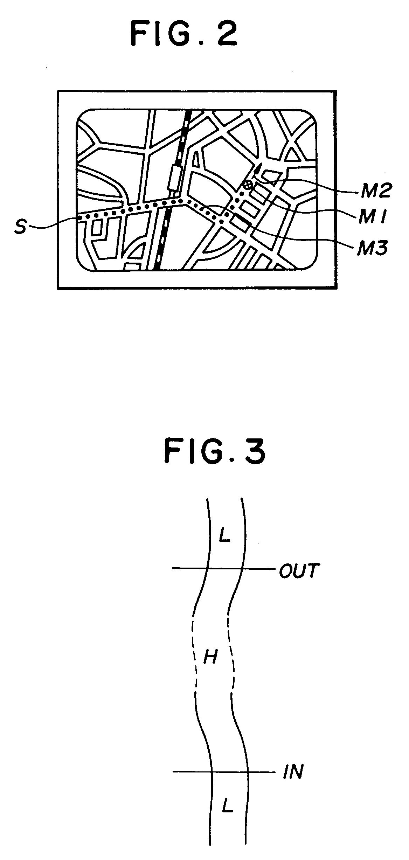

In the navigation system part 9, the selectively read out map is displayed on the picture plane of the display unit 7, as shown in Fig. 2. Furthermore, a mark M1 which indicates a current position of the vehicle determined in the system of X-Y coordinates, with the reduced scale of the map predetermined by the signal processing unit 3, on the basis of the travel of the vehicle from a starting point S set on the map, a mark M2 which indicates a running direction of the vehicle at the current position and a mark M3 which indicates a travel path from the starting point S to the current position are displayed on the same picture plane, in such manner that the travel path simulates the actual travel of the vehicle.

In the construction of the type as described above, a kind of road, such as highway, usual road, straight road, winding road or the like, is designated on an expected travel path on the map displayed on the picture plane, by an input operation of the manual operating unit 8 under the control of the signal processing unit 3, and each of the informations concerning the road, such as highway or the like is previously input. It is judged that the vehicle has come to the designated road on the expected travel path when the mark M1 indicating the current position of the vehicle displayed on the picture plane has come to a preset position on the expected travel path, and then an output is produced concerning a predetermined road information corresponding to the designated road judged as mentioned above.

For designating the highway or the like on the expected travel path on the displayed map and inputting the information concerning the road, such as the highway or the like, the position of an entrance IN of the highway H on the map displayed on the picture plane is set and the road information indicating the highway is input, for example. In the same manner, the position of an exit OUT of the highway is set, and a road information indicating a usual road is input. In Fig. 3, L indicates the usual road.

The signal processing unit 3 is so constructed that when the mark M1 indicating the current position of the vehicle has come to the preset position indicating the entrance IN of the highway H on the expected travel path on the map displayed on the picture plane, the road information RD concerning the highway which has been previously input at this position is fed to the controller 10.

Accordingly, the controller 10 acts to read out the fact that the vehicle has entered the highway, on the basis of the content of the road information RD at this moment and then acts to cause the respective switching control operations of the suspension system switching drive 11 and the steering system switching drive 12, thereby switching the suspension system of the vehicle to its hard condition and switching the steering system to its soft condition.

Furthermore, the signal processing unit 3 is so constructed that when the mark M1 indicating the current position of the vehicle has come to the preset position indicating the exit OUT of the highway H on the expected travel path on the map displayed on the picture plane, the road information RD of the usual road which has been input at this position is fed to the controller 10, in the same manner as in entering the highway.

Accordingly, the controller 10 acts to read out the fact that the vehicle has entered the usual road, on the basis of the content of the road information and then acts to cause the respective switching control operations of the suspension system switching drive 11 and the steering system switching drive 12, thereby switching the suspension system of the vehicle to its soft condition and switching the steering system to its sharp condition.

In the above description, the present invention was described, with reference to the switching of the suspension system and the steering system, but the present invention can be applied to switching of number of valves of an engine or switching of increasing or decreasing of a height of a vehicle.

As explained above, the present invention provides a device for switching a vehicle characteristics which employs a navigation system for successively and renewedly displaying a current position of a vehicle on a map displayed on a picture plane as the vehicle proceeds, in which when the vehicle comes to a highway or the like, a predetermined road information, which has been previously registered, is read out, thereby detecting a state of a road on which the vehicle is presently running and a vehicle characteristics is switched depending on the detected state of road, for example a steering system of the vehicle is switched to soft or hard condition or a steering system of the vehicle is switched to sharp or soft condition, according to a present control program. Thus, the present invention presents a superior advantage in that a setting of an optimum vehicle characteristics can be automatically effected, depending upon a state of road, on the basis of combinations of a plurality of systems, such as a suspension system, a steering system and the like.

## Claims

1. A device for automatically switching vehicle characteristics of a vehicle, comprising:
- memory means (4) for storing road information concerning a kind of road (H,L);
- sensor means (1,2) for detecting a current position (M1) of said vehicle;
- determination means (3) operatively connected to said memory means (4) and said sensor means (1,2) for determining from said memory means (4) a kind of road (H,L) corresponding to said current position (M1) detected by said sensor means (1,2);
- output means (10) operatively connected to said determination means (3) for outputting a switching signal depending on the kind of road (H,L) determined by said determination means (3); and
- switching means (11,12) operatively connected to said output means (10) for switching said vehicle characteristics according to said switching signal;
**characterised in**
that said device further comprises input means (8) for inputting road information concerning an expected travel path to said memory means (4).

2. A device for switching vehicle characteristics according to claim 1, **characterised in**
that said sensor means (1,2) for detecting a current position (M1) of said vehicle comprise a distance sensor (1) for detecting a running distance of said vehicle and a direction sensor (2) for detecting a running direction of said vehicle, both sensors (1,2) being part of a navigation system (9) calculating said current position (M1) of the vehicle in a system of X-Y coordinates by an arithmetic operation using said detected running distance and said detected running direction, and
that said device further comprises a display unit (7) on which said current position (M1) of the vehicle is displayed on a road map having the same system of X-Y coordinates.

3. A device for switching vehicle characteristics according to claim 1 or 2, **characterised in**
that the kind of road (H,L) includes a highway or/and a usual road.

4. A device for switching vehicle characteristics according to one of claims 1 to 3, **characterised in**
that the kind of road includes a straight road or/and a winding road.

5. A device for switching vehicle characteristics according to one of claims 1 to 4**, characterised in**
that the device is applied to a suspension system of the vehicle, the characteristics of which can be switched between a soft and a hard condition.

6. A device for switching vehicle characteristics according to one of claims 1 to 5, **characterised in**
that the device is applied to a steering system of the vehicle, the characteristics of which can be switched between a sharp and a soft condition.

7. A device for switching vehicle characteristics according to one of claims 1 to 6, **characterised in**
that the device is applied to a height adjusting system of the vehicle, the characteristics of which can be switched between a high and a low height of the vehicle.

## Patentansprüche

1. Einrichtung zum automatischen Umschalten von Fahrzeugeigenschaften eines Fahrzeugs, umfassend:
- Speichermittel (4) zum Speichern von eine Straßenart (H, L) betreffender Straßeninformation;
- Sensormittel (1, 2) zum Erfassen einer momentanen Position (M1) des Fahrzeugs;
- Bestimmungsmittel (3), welche betriebsmäßig mit den Speichermitteln (4) und den Sensormitteln (1, 2) verbunden sind, um aus den Speichermitteln (4) eine Straßenart (H, L) zu bestimmen, welche der momentanen, durch die Sensormittel (1, 2) erfaßten Position (M1) entspricht;
- Ausgabemittel (10), welche betriebsmäßig mit den Bestimmungsmitteln (3) zum Ausgeben eines Umschaltsignals verbunden sind, welches von der durch die Bestimmungsmittel (3) bestimmten Straßenart (H, L) abhängt; und
- Umschaltmittel (11, 12), welche betriebsmäßig mit den Ausgabemitteln (10) zum Umschalten der Fahrzeugeigenschaften gemäß dem Umschaltsignal verbunden sind,
**dadurch gekennzeichnet**, daß die Einrichtung ferner Eingabemittel (8) umfaßt zum Eingeben von einen erwarteten Reiseweg betreffender Straßeninformation in die Speichermittel (4).

2. Einrichtung zum Umschalten von Fahrzeugeigenschaften nach Anspruch 1**, dadurch gekennzeichnet**, daß die Sensormittel (1, 2) zum Erfassen einer momentanen Position (M1) des Fahrzeugs einen Distanzsensor (1) zum Erfassen der Fahrdistanz des Fahrzeugs umfassen sowie einen Richtungssensor (2) zum Erfassen einer Fahrrichtung des Fahrzeugs, wobei beide Sensoren (1, 2) Teil eines Navigationssystems (9) sind, welches die momentane Position (M1) des Fahrzeugs in einem System von X-Y-Koordinaten durch eine arithmetische Operation unter Verwendung der erfaßten Fahrdistanz und der erfaßten Fahrrichtung berechnet, und daß die Einrichtung ferner eine Anzeigeeinheit (7) umfaßt, auf welcher die momentane Position (M1) des Fahrzeugs auf einer Straßenkarte angezeigt ist, welche das gleiche System von X-Y-Koordinaten aufweist.

3. Einrichtung zum Umschalten von Fahrzeugeigenschaften nach Anspruch 1 oder 2, **dadurch gekennzeichnet**, daß die Straßenart (H, L) eine Fernstraße oder/und eine gewöhnliche Straße umfaßt.

4. Einrichtung zum Umschalten von Fahrzeugeigenschaften nach einem der Ansprüche 1 bis 3, **dadurch gekennzeichnet**, daß die Straßenart eine gerade Straße oder/und eine kurvige Straße umfaßt.

5. Einrichtung zum Umschalten von Fahrzeugeigenschaften nach einem der Ansprüche 1 bis 4, **dadurch gekennzeichnet**, daß die Einrichtung bei einem Aufhängungssystem des Fahrzeugs angewandt ist, dessen Eigenschaften zwischen einem weichen und einem harten Zustand umgeschaltet werden können.

6. Einrichtung zum Umschalten von Fahrzeugeigenschaften nach einem der Ansprüche 1 bis 5, **dadurch gekennzeichnet**, daß die Einrichtung bei einem Lenksystem des Fahrzeugs angewandt ist, dessen Eigenschaften zwischen einem straffen und einem weichen Zustand umgeschaltet werden können.

7. Einrichtung zum Umschalten von Fahrzeugeigenschaften nach einem der Ansprüche 1 bis 6, **dadurch gekennzeichnet**, daß die Einrichtung bei einem Höheneinstellsystem des Fahrzeugs angewandt ist, dessen Eigenschaften zwischen einer hohen und einer niedrigen Höhe des Fahrzeugs umgeschaltet werden können.

## Revendications

1. Dispositif pour modifier automatiquement des caractéristiques de roulage d'un véhicule, comprenant:
- un moyen à mémoire (4) pour stocker une information routière concernant un type de route (H,L);
- un moyen détecteur (1,2) pour détecter une position courante (M1) dudit véhicule;
- un moyen de détermination (3) fonctionnellement connecté audit moyen à mémoire (4) et audit moyen détecteur (1,2) pour déterminer à partir dudit moyen à mémoire (4) un type de route (H,L) correspondant à ladite position courante (M1) détectée par ledit moyen détecteur (1,2);
- un moyen de sortie (10) fonctionnellement connecté audit moyen de détermination (3) pour fournir un signal de commutation selon le type de route (H,L) déterminé par ledit moyen de détermination (3); et
- un moyen de commutation (11, 12) fonctionnellement connecté audit moyen de sortie (10) pour modifier lesdites caractéristiques de roulage en fonction dudit signal de commutation;
caractérisé en ce que
ledit dispositif comprend en outre un moyen d'introduction (8) pour introduire des informations routières concernant un trajet de déplacement prévu, dans ledit moyen à mémoire (4).

2. Dispositif pour modifier les caractéristiques de roulage selon la revendication 1 caractérisé
en ce que ledit moyen détecteur (1,2) pour détecter une position courante (M1) dudit véhicule comprend un capteur de distance (1) pour détecter une distance de parcours dudit véhicule et un capteur de direction (2) pour détecter une direction de parcours dudit véhicule, les deux capteurs (1,2) faisant partie d'un système de navigation (9) calculant ladite position courante (M1) du véhicule dans un système de coordonnées X-Y par une opération arithmétique utilisant ladite distance de parcours détectée et ladite direction de parcours détectée, et
en ce que ledit dispositif comprend en outre une unité d'affichage (7) sur laquelle ladite position courante (M1) du véhicule est affichée sur une carte routière ayant le même système de coordonnées X-Y.

3. Dispositif pour modifier les caractéristiques de roulage conformément à la revendication 1 ou 2, caractérisé en ce que:
le type de route (H,L) comprend les autoroutes et/ou les routes ordinaires.

4. Dispositif pour modifier les caractéristiques de roulage selon l'une des revendications 1 à 3, caractérisé en ce que le type comprend les routes droites et/ou les routes à lacets.

5. Dispositif pour modifier les caractéristiques de roulage selon l'une des revendications 1 à 4, caractérisé en ce que:
le dispositif est appliqué à un système de suspension du véhicule, dont les caractéristiques sont commutées entre un état mou et un état dur.

6. Dispositif pour modifier les caractéristiques de roulage selon l'une des revendications 1 à 5, caractérisé en ce que le dispositif est appliqué à un système de direction du véhicule, dont les caractéristiques doivent être commutées entre un état dur et un état mou.

7. Dispositif pour modifier les caractéristiques de roulage selon l'une des revendications 1 à 6, caractérisé en ce que le dispositif est appliqué à un système d'ajustement de hauteur du véhicule, dont les caractéristiques peuvent être commutées entre une grande hauteur et une faible hauteur du véhicule.
